Europäisches Patentamt

European Patent Office

Office européen des brevets

(11) Publication number: **0 104 788**
**B1**

(12) **EUROPEAN PATENT SPECIFICATION**

(45) Date of publication of patent specification: **28.10.87**

(21) Application number: **83305012.3**

(22) Date of filing: **31.08.83**

(51) Int. Cl.⁴: **E 21 B 36/00,** F 16 L 59/00,
G 01 K 11/08

(54) **Methods of and apparatus for detecting exposure of components to selected temperatures.**

(30) Priority: **31.08.82 US 413289**

(43) Date of publication of application:
**04.04.84 Bulletin 84/14**

(45) Publication of the grant of the patent:
**28.10.87 Bulletin 87/44**

(84) Designated Contracting States:
**AT BE CH DE FR GB IT LI LU NL SE**

(56) References cited:
**US-A-3 002 385**
**US-A-3 478 783**
**US-A-3 574 357**
**US-A-3 733 889**
**US-A-3 967 579**
**US-A-4 056 970**
**US-A-4 272 988**

**IBM TECHNICAL DISCLOSURE BULLETIN, vol.
19, no. 10, pages 4021-4022, March 1977; K.Y.
AHN et al.: "Surface temperature monitor for
thin-film processing equipment"**

(73) Proprietor: **THE BABCOCK & WILCOX
COMPANY
1010 Common Street P.O. Box 60035
New Orleans Louisiana 70160 (US)**

(72) Inventor: **Whaley, Hubert L.
233 Warwick Lane
Lynchburg Virginia 24503 (US)**

(74) Representative: **Cotter, Ivan John et al
D. YOUNG & CO. 10 Staple Inn
London WC1V 7RD (GB)**

Courier Press, Leamington Spa, England.

## Description

This invention relates to methods of and apparatus for detecting or determining the exposure of a component to a selected temperature above an ambient.

Heavy oil and tar sands represent huge untapped resources of liquid hydrocarbons which will be produced in increasing quantities to help supplement declining production of conventional crude oil. These deposits must, however, be heated to reduce the oil viscosity before it will flow to the producing wells in economical quantities. The dominant method of heating is by injection of surface generated steam in either a continuous (steam flood) or intermittent (steam stimulation or "huff and puff") mode.

When steam is injected down long injection pipes or "strings", a significant amount of thermal energy is lost to the rock overburden (150 to 2130 m or 500 to 7000 feet) which covers the oil deposit. In the initial steam injection projects, the price of oil did not justify the prevention of this heat loss, but now with the price of oil at $30.00 or more a barrel, insulation systems for the well injection pipe have become economically justified.

Several methods are known for determining the exposure of a component to an excess selected temperature which is indicative of insulation failure. Such methods include the real time or service monitoring of surface temperature using thermocouples, thermistors, thermometers, optical pyrometers or infrared cameras.

A system of monitoring the input and output fluid temperatures may also be utilized for determining the integrity of the insulation, where the component is designed for conveying a fluid. Additionally, a measurement of power output versus fuel consumption, i.e., efficiency, gives an indication of the state of the insulation since a degraded insulation would reduce efficiency.

In all of the aforementioned techniques, once the component has cooled to ambient temperature, the evidence of thermal failure is no longer present. The techniques must be exercised during real time and thus are limited to cases where real time monitoring is possible and practical.

Off-line Thermal Testing Techniques are also known which either directly establish the integrity of the insulation or infer this integrity. The component is removed from service for testing.

According to one technique, an induced heat flow using an induction heater is monitored by an infrared camera or other temperature sensing equipment. Alternatively, the component can be placed into a test loop in which thermal efficiency is measured.

Thermal failure can be inferred in an off-line situation by observing the conditions of the component or some part thereof, which has previously been exposed to overheating. Visual inspection may determine severe degradation, for example, warping or melting of the component due to overheating. Discoloration of the normal surface appearance is also a clue to thermal failure. This discoloration may be indicative of a change in tempering or the like. A paint that permanently changes color when exposed to a particular temperature can be applied to such things as storage tanks in chemical factories. The usefulness of such a paint for rugged extreme environments has not been established, however, in particular for oil well environments where steam is injected into a well to extract otherwise "frozen" oil supplies.

It is known to utilize injected steam to extract such oil supplies. Such steam is injected into a well using an insulated steam injection tube which, in known fashion, comprises inner and outer coaxial tubes defining between them an annular space which is provided with insulation means, such as thermal insulation and evacuation of the space to obtain a vacuum. The use of insulation between the coaxial tubes is disclosed, for example, in U.S. Patent No. 3,574,357 to Alexandru et al and U.S. Patent No. 3,478,783 to Doyle.

A preferred embodiment of the present invention described hereinbelow provides a technique, including a method and apparatus, for determining the exposure of a component to a selected temperature above an ambient, which selected temperature corresponds, for example, to the temperature at which insulation associated with the component has failed. According to the preferred embodiment, a thin wafer or element, here collectively termed a coupon, is bonded to a surface of the component with a bonding agent or substance which melts or degrades at or above selected temperature. If the operating temperature then exceeds its design limits, the coupon will fall off, thereby providing a ready indication of thermal failure. Such a technique is particularly (but not exclusively) suited to conditions experienced in oil wells where delicate instrumentation, such as thermocouples and the like, is not feasible. The wafer or element may be made of steel, plastic or other material, depending on the environment, with the bonding agent preferably being a brazing or soldering alloy which is designed to melt at a particular temperature, an expoxy, or the like. A number of coupons designed for various temperature ranges may be affixed to a component, for example to give an idea of the severity of insulation failure. Alternatively, a single coupon or wafer may be utilized. If the component has an outside and inside, the coupon or coupons may be adhered either to the outside or the inside of the component. Particularly in harsh environments, such as those of an oil well, it is best to adhere the coupon to the interior of an outer tubular component. The failure of the bonding agent and, thus, loss of adhesion between the coupon and inner surface of the outer tubular component, can be detected using an ultrasonic transducer.

According to the invention there is provided a method of detecting the exposure of a component to a selected temperature above an ambient, during an operation, the method being characterised by:

bonding a coupon to the component using a bonding agent which changes state from a solid to a liquid at a temperature which is equal to at least the selected temperature, whereby the bonding agent no longer bonds the coupon to the component when the component is exposed to the selected temperature;

initiating the operation; and

observing the component to determine whether the coupon is bonded to the component.

The invention also provides apparatus for detecting the exposure of a component to a selected temperature above an ambient during an operation, the apparatus being characterised by a coupon bonded to the component with a bonding agent which changes state from a solid to a liquid at a temperature which is equal to at least the selected temperature whereby the bonding agent is not capable of bonding the coupon to the component when the component is exposed to the selected temperature.

Further, the invention provides an insulated steam injection tube characterised by:

an outer tube;

an inner tube mounted within the outer tube and defining an annular space between inner and outer tube walls;

insulation means in the annular space for insulating the outer tube from the inner tube; and

a wafer bonded to at least one of an inner and outer surface of the outer tube with a bonding agent which changes state from a solid to a liquid at a temperature which is at least equal to the selected temperature whereby the bonding agent no longer bonds the coupon to the outer tube when the outer tube is exposed to the selected temperature to thereby indicate an exposure of the outer tube to the selected temperature.

Also, the invention provides a method of detecting the exposure of a component to a selected temperature above an ambient, during an operation, the method being characterised by:

applying a bonding agent to the component, which bonding agent changes state from a solid to a liquid at a temperature which is equal to at least the selected temperature, whereby the bonding agent no longer adheres to the component when the component is exposed to the selected temperature;

initiating the operation; and

observing the bonding agent to determine whether it is bonded to the component.

The present invention further provides a method of detecting the exposure of a component to a selected temperature above an ambient, during an operation, the method comprising bonding a coupon to the component using a bonding agent which is capable of withstanding temperatures only up to the selected temperature above which the bonding agent no longer holds the coupon to the component, initiating the operation and observing the component to determine whether the coupon is bonded thereto.

The invention additionally provides apparatus which is useful in detecting exposure of the apparatus to a selected temperature above an ambient during an operation, the apparatus comprising an outer tube, an inner tube coaxial to the outer tube and insulation between the inner and outer tube, with a coupon bonded to at least one of an inner and outer surface of the outer tube, the coupon being bonded with a bonding agent which is capable of withstanding temperatures only up to the selected temperature, above which the bonding agent is no longer capable of holding the coupon to the component.

Preferred apparatus embodying the invention and described hereinbelow is simple in design, rugged in construction and economical to manufacture.

The invention will now be further described, by way of illustrative and non-limiting example, with reference to the accompanying drawings, in which:

Figure 1 is a side elevational view of an insulated steam injection tube illustrating a typical embodiment of the invention;

Figure 2 is a view similar to Figure 1, illustrating another embodiment of the invention; and

Figure 3 is a representation of two displays from an ultrasonic instrument which are indicative of the presence and absence of a coupon.

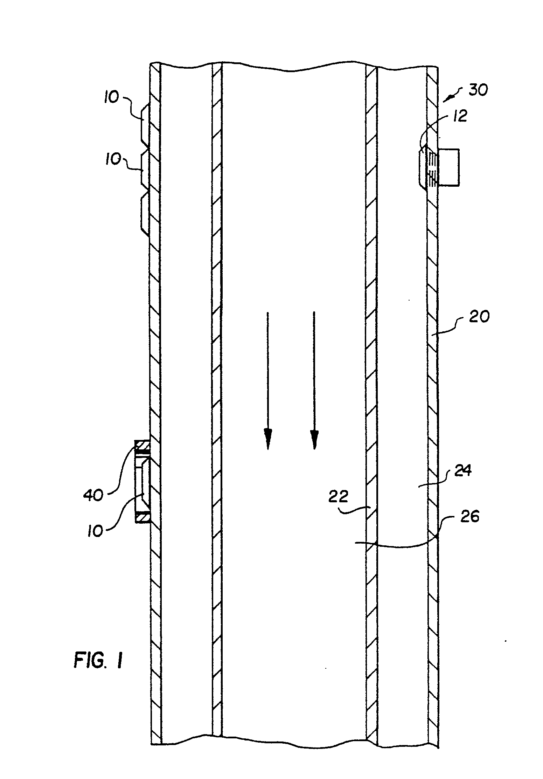

Figure 1 of the drawings shows a wafer, element or coupon 10 which can be bonded to the exterior surface of an outer tube 20 of an insulated steam injection tube generally designated 30. The tube 30 comprises, in addition to the outer tube 20, an inner tube 22 which defines with the outer tube an annular space 24 which can either be filled with insulation or exposed to a vacuum or both for insulating the inner component from the outer component. The inner space 26 defined by inner tube 22 receives a flow of steam in known fashion. With failure of the insulation means in space 24, the outer tube or component 20 is exposed to a temperature above ambient temperature and above a design limit. Such insulation failure drastically reduces the efficiency of the operation in that much heat is lost from the steam before it can be utilized to extract oils from the well.

Coupons 10 are bonded to the outer component 20 using a bonding agent which is designed to melt or degrade at and above the selected overtemperature. By mounting the coupon 10 on the exterior of component 20, simple visual inspection of the component upon routine removal of the components from the well will determine the presence or absence of the coupon, thus the exposure of the component to the overtemperature. In view of the rigorous environment of an oil well, the coupons 10 are provided with bevelled edges to prevent their being mechanically dislodged from their bonded position.

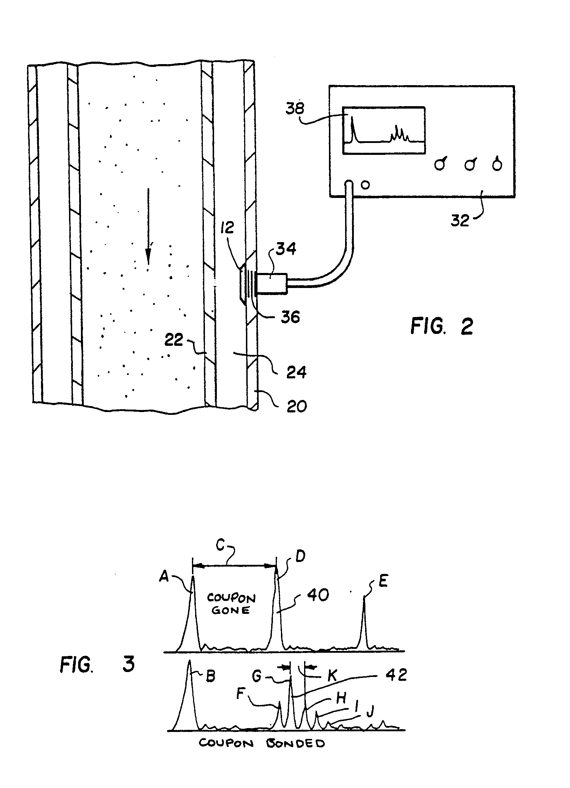

An alternative embodiment provides for the bonding of one or more coupons 12 to the interior surface of component 20. Since simple visual inspection now becomes impossible for determining the presence or absence of the coupon, an ultrasonic transducer 34 shown in Fig. 2 can be utilized. Such ultrasonic transducers are known and are useful in determining the thickness of metal parts. Such ultrasonic

3

transducers are discussed in the publication Steam, Its Generation and Use, 39th edition, 1978, The Babcock & Wilcox Company, pages 31-7 and 31-8. In addition to ultrasonic transducers, other non-destructive examination techniques such as the use of eddy current sensors and x-ray means may be useful for detecting the presence of the coupon and/or the bonding agent on the interior surface of component 20.

Ultrasonic transducers essentially measure the wall thickness of a component. With coupon 12 mounted in a known location along the tube 20, an ultrasonic instrument 32 can be utilized to determine whether the coupon is at the position or not. Even if the coupon is held at the position by the surrounding insulation, the fact that the coupon is no longer bonded to the interior surface of tube 20 is detected by the ultrasonic instrument in that the interface which is established between the coupon and the inner surface is broken.

The ultrasonic instrument 32, using an ultrasonic transducer 34, generates and transmits ultrasonic waves shown at 36 through the component 20 and, with coupon 12 adhered, through the coupon as well. A CRT display 38 is utilized to determine the presence or absence of the coupon. Alternatively, a digital thickness type ultrasonic instrument can be utilized which provides a reading of the wall thickness directly in inches or millimeters. As shown in Fig. 3, curve 40 shows the CRT display when the coupon is gone and curve 42 shows the CRT display when the coupon is in place and bonded to the component. These curves are illustrative and do not necessarily depict the exact response obtained for any particular coupon and transducer combination. A discussion of the ultrasonic testing of bonded elements can be found in *Ultrasonics,* 2nd edition, Carlin, McGraw Hill 1960, at page 270. It is there noted that the bond between metal and other material can be shown by ultrasonic testing and that when the bond between the back of a metal part and a material bonded thereto is defective, the signal of the tester will be affected.

In manufacturing the present apparatus, the string lengths of tubing are provided at one or more known locations with coupons 10 or 12. After the strings are utilized in the well to supply steam thereto, they are withdrawn and replaced on their racks in known fashion. The strings can then be examined either visually for exteriorly connected coupons or using ultrasonic instruments for exteriorly bonded coupons to determine the integrity of insulation of each string. Strings with degraded insulation can thus be eliminated from future operations.

Advantages of the present technique include the fact that thermal integrity can be established easily and quickly, no reheating of the component is necessary, inexpensive and portable test equipment can be utilized in a fast manner by unskilled operators and the testing operation is of the simple "go-no-go" type.

As compared with paint with changes color upon the exposure to a selected temperature, the present techniques is advantageous in that no false reading can be provided by contamination with dirt or other chemical reactions as is the case for the paint. Also, no subjective decision is required in determining whether a color change has, in fact, taken place.

TABLE I

| Bonding agent | Melting or degradation temp. (°C) |
| --- | --- |
| 50% Sn/50% In-Solder | 117—126 |
| 63% Sn/36.65% Pb/0.35% Sb | 183 |
| 63% Sn/37% Pb-Solder | 183 |
| 96% Sn/4% Ag-Solder | 221 |
| 95% Sn/5% Sb-solder | 232—238 |
| 93% Pb/5.2% Sn/1.8% Ag | 299 |
| 45% Ag/24% Cd/16% Zn/15% Cu | 607—618 |

The bonding agent itself may be used as the coupon. The transducer measures the thickness of the bonding agent as well as the coupon thickness especially if the bonding agent is metallic. The bonding agent may be placed in the annulus with the tubes in a horizontal position for baking-out the tubes (heating the tubes to remove gases from the surfaces thereof). The tubes are then allowed to cool and the bonding agent solidify on the interior surface of the outer tube while the tubes are still horizontal. The bonding agent may be provided as a solidified puddle or a small reservoir may be provided in the outer tube wall to contain it.

It is possible that a high temperature could cause the bonding agent to melt and fall toward the bottom of the tubing but that the coupon may remain in position because of being held there by the insulation. However, in such a case, the tubing wall thickness only would be measured since sonic waves (typically 3 to 5 megahertz waves) will not cross the interface with the coupon if the coupon is not bonded to the wall.

The bond must be a solid bond that excludes air. If the coupon were only partially bonded, a skilled operator would recognize it and move the instrument around for additional measurements.

An advantage of the coupon, however, over just a bonding agent is the added thickness of the coupon for easier measurement. The coupon may be in the form of a circumferential ring which allows for easy determination of the location for taking the measurement by measuring a specified distance from one end of the component.

Rings 40 may be welded around the coupons (when the coupons are bonded to the exterior surface of the outer tube) to protect them. Also, they may have bevelled edges for additional protection. Alternatively, the coupons may be located in recesses or notches in the surface of the outer tubular 20.

Referring to Fig. 3, the distance along the x-axis represents time which is related to thickness of material in which a signal is reverberating. Distance along the y-axis represents signal strength each time the wave is measured by the instrument as it reverberates within the material. Points A and B represent the strength of the initial excitation pulse of the transducer. The distance C represents the wall thickness. Point D indicates a reflection of substantially all of the energy of the signal to the wall surface, and point E indicates another reverberation of the signal through the wall thickness with there being, of course, some energy loss. Point F represents a substantially lesser reflection of energy of the signal through the wall since a substantial amount of the energy continues to travel through the coupon. Points G, H, I, and J represent reverberations of the signal in the coupon with successive loss of energy on each reverberation. Distance K therefore represents coupon thickness.

The annular space between the inner and outer tubes or tubulars may advantageously be insulated with fibrous or layered insulation, and/or evacuated to establish a thermal barrier. The space, when evacuated, may also be provided with a getter material which absorbs gas that may migrate into the space, to maintain the vacuum. Such gases include hydrogen from corrosion of the outer tube and $N_2$, CO or $O_2$ which is outgassed from the inner tube. The getter material (e.g. titanium) is placed adjacent the inner tube so as to be exposed to the elevated steam temperature of 204°C to 371°C (400°F to 700°F), and activated to more effectively absorb the stray gases.

**Claims**

1. A method of detecting the exposure of a component to a selected temperature above an ambient, during an operation, the method being characterised by:

bonding a coupon (10, 12) to the component (20) using a bonding agent which changes state from a solid to a liquid at a temperature which is equal to at least the selected temperature, whereby the bonding agent no longer bonds the coupon (10, 12) to the component (20) when the component is exposed to the selected temperature;

initiating the operation; and

observing the component (20) to determine whether the coupon (10, 12) is bonded to the component.

2. A method according to claim 1, wherein the bonding agent melts at the selected temperature.

3. A method according to claim 1, wherein the bonding agent degrades at the selected temperature.

4. A method according to claim 1, claim 2 or claim 3, wherein the component (20) is insulated at an inner surface thereof by insulation means, attainment of the selected temperature being indicative of a failure of the insulation means.

5. A method according to claim 4, including bonding the coupon (12) to the inner surface of the component (20).

6. A method according to claim 5, wherein the step of observing the component (20) to determine whether the coupon (12) is bonded to the component comprises sonically measuring thickness through the component and any coupon bonded thereto at the location where the coupon was bonded to the component.

7. A method according to any one of claims 1 to 4, including bonding the coupon (10) to an external surface of the component (20) and observing the component visually to determine whether the coupon is bonded to the component.

8. A method according to any one of claims 1 to 4, wherein the coupon (12) is bonded to the component (20) on one side thereof, and the step of observing the component (20) includes detecting from the other side of the component whether the coupon is bonded to said one side.

9. A method according to any one of the preceding claims, wherein the bonding agent is solder chosen from a group consisting of a tin alloy, a lead alloy, a silver alloy and a copper alloy.

10. Apparatus for detecting the exposure of a component to a selected temperature above an ambient during an operation, the apparatus being characterised by a coupon (10, 12) bonded to the component (20) with a bonding agent which changes state from a solid to a liquid at a temperature which is equal to at least the selected temperature whereby the bonding agent is not capable of bonding the coupon (10, 12) to the component (20) when the component is exposed to the selected temperature.

11. An insulated steam injection tube (30) characterised by:

an outer tube (20);

an inner tube (22) mounted within the outer tube (20) and defining an annular space (24) between inner and outer tube walls;

insulation means in the annular space (24) for insulating the outer tube (20) from the inner tube (22); and

a wafer (10, 12) bonded to at least one of an inner and outer surface of the outer tube (20) with a bonding agent which changes state from a solid to a liquid at a temperature which is at least equal to the selected temperature whereby the bonding agent no longer bonds the coupon (10, 12) to the outer tube (20) when the outer tube is exposed to the selected temperature to thereby indicate an exposure of the outer tube to the selected temperature.

12. A method of detecting the exposure of a component to a selected temperature above an ambient, during an operation, the method being characterised by:

applying a bonding agent to the component (20), which bonding agent changes state from a solid to a liquid at a temperature which is equal to at least the selected temperature, whereby the bonding agent no longer adheres to the component (20) when the component is exposed to the selected temperature; initiating the operation; and

observing the bonding agent to determine whether it is bonded to the component (20).

13. A method according to claim 12, including bonding a coupon (10, 12) to the component (20) using the bonding agent and observing the component to determine whether the coupon is bonded to the component after the initiation of the operation.

14. A method according to claim 12, including applying at least two bonding agents having different melting temperatures to the component (20).

15. A method according to claim 13, including bonding at least two coupons (10, 12) to the component (20) using two different bonding agents having different melting points.

16. A method according to claim 12, wherein the component (20) comprises an outer tubular member of an insulated steam injection tube (30) formed of the outer tubular member (20) and an inner tubular member (22) spaced inwardly of the outer tubular member and forming an annular space (24) therewith, the bonding agent being applied to at least one of an inner and outer surface of the outer tubular member (20).

17. A method according to claim 16, including bonding a coupon (10, 12) using the bonding agent to the outer tubular member (20).

18. A method according to claim 17, wherein the coupon (10, 12) has bevelled edges.

19. A method according to claim 17 or claim 18, including applying the bonding agent and connecting the coupon (10) to an outer surface of the outer tubular member (20) and applying a ring (40) around the coupon for protecting the coupon.

20. A method according to claim 12, wherein the bonding agent is applied to the component (20) on one side thereof, and the step of observing the component (20) includes detecting from the other side of the component whether the bonding agent is bonded to said one side.

**Patentansprüche**

1. Verfahren zum Erfassen, daß ein Bauteil während eines Betriebes einer ausgewählten Temperatur oberhalb der Umgebungstemperatur ausgesetzt ist, wobei das Verfahren gekennzeichnet ist durch festes Anbringen eines Kontrollabschnittes (10, 12) an dem Bauteil (20) unter Benutzung eines Haftmittels, welches seinen Zustand von fest nach flüssig bei einer Temperatur ändert, welche zumindest der ausgewählten Temperatur gleich ist, wodurch das Haftmittel den Kontrollabschnitt (10, 12) nicht länger an dem Bauteil (20) hält, wenn das Bauteil der ausgewählten Temperatur ausgesetzt ist; Inbetriebnahme; und

Beobachten des Bauteiles (20), um zu bestimmen, ob der Kontrollabschnitt (10, 12) an dem Bauteil anhaftet.

2. Verfahren nach Anspruch 1, wobei das Haftmittel bei der ausgewählten Temperatur schmilzt.

3. Verfahren nach Anspruch 1, wobei das Haftmittel bei der ausgewählten Temperatur abbaut.

4. Verfahren nach Anspruch 1, 2 oder 3, wobei das Bauteil (20) an seiner inneren Oberfläche durch Isolationsmittel isoliert wird, wobei das Erreichen der ausgewählten Temperatur Anzeichen eines Fehlers der Isoliermittel ist.

5. Verfahren nach Anspruch 4, unter Einschluß des Anheftens des Kontrollabschnittes (12) an der inneren Oberfläche des Bauteiles (20).

6. Verfahren nach Anspruch 5, wobei der Schritt des Beobachtens des Bauteils (20) um zu bestimmen, ob der Kontrollabschnitt (12) an dem Bauteil anhaftet, die Schallmessung der Dicke durch das Bauteil und einen daran anhaftenden Kontrollabschnitt aufweist, und zwar dort, wo der Kontrollabschnitt an das Bauteil angeheftet war.

7. Verfahren nach einem der Ansprüche 1 bis 4, unter Einschluß des Anheftens des Kontrollabschnittes (10) an eine äußere Oberfläche des Bauteiles (20) und des visuellen Beobachtens des Bauteiles um zu bestimmen, ob der Kontrollabschnitt an der Bauteil anhaftet.

8. Verfahren nach einem der Ansprüche 1 bis 4, wobei der Kontrollabschnitt (12) an einer Seite des Bauteiles (20) angebracht wird und der Schritt des Beobachtens des Bauteiles (20) das Erfassen von der anderen Seite des Bauteiles, ob der Kontrollabschnitt an der einen Seite anhaftet, einschließt.

9. Verfahren nach einem der vorstehenden Ansprüche, wobei das Haftmittel ein Lot ist, welches aus einer Gruppe ausgewählt ist, die aus einer Zinnlegierung, einer Bleilegierung, einer Silberlegierung und einer Kupferlegierung besteht.

10. Vorrichtung zum Erfassen, daß während eines Betriebes ein Bauteil einer ausgewählten Temperatur oberhalb einer Umgebungstemperatur ausgesetzt ist, wobei die Vorrichtung gekennzeichnet ist durch einen Kontrollabschnitt (10, 12), welcher an dem Bauteil (20) mit einem Haftmittel anhaftet, welches seinen Zustand von fest nach flüssig bei einer Temperatur ändert, welche zumindest der ausgewählten Temperatur gleich ist, wodurch das Haftmittel nicht in der Lage ist, den Kontrollabschnitt (10, 12) an dem Bauteil (20) zu halten, wenn das Bauteil der ausgewählten Temperatur asugesetzt ist.

11. Isoliertes Dampfeinführungsrohr (30) gekennzeichnet durch

ein äußeres Rohr (20);

eine inneres Rohr (22), welches innerhalb des äußeren Rohres (20) montiert ist und einen ringförmigen Raum (24) zwischen den inneren und den äußeren Rohrwänden bildet;

Isolationseinrichtungen in dem ringförmigen Raum (24) zum Isolieren des äußeren Rohres (20) von dem inneren Rohr (22); und

einer Scheibe (10, 12), welche zumindest an einer der inneren und äußeren Oberflächen des äußeren Rohres (20) mit einem Haftmittel angeheftet ist, welches seinen Zustand von fest nach flüssig bei einer Temperatur ändert, die zumindest gleich der ausgewählten Temperatur ist, wodurch das Haftmittel den Kontrollabschnitt (10, 12) nicht länger an dem äußeren Rohr (20) hält, wenn das äußere Rohr der ausgewählten Temperatur ausgesetzt ist, um dadurch anzuzeigen, daß das äußere Rohr der ausgewählten Temperatur ausgesetzt ist.

12. Verfahren zum Erfassen, daß eine Bauteil während eines Betriebes einer ausgewählten Temperatur oberhalb einer Umgebungstemperatur ausgesetzt ist, wobei das Verfahren gekennzeichnet ist durch:

Auftragen eines Haftmittels auf das Bauteil (20), wobei das Haftmittel seinen Zustand von fest nach flüssig bei einer Temperatur ändert, welche zumindest der ausgewählten Temperatur gleich ist, wodurch das Haftmittel nicht länger an dem Bauteil (20) hält, wenn das Bauteil der ausgewählten Temperatur ausgesetzt ist;

Inbetriebnahme; und

Beobachten des Haftmittels um zu bestimmen, ob es an dem Bauteil (20) anhaftet.

13. Verfahren nach Anspruch 12, inklusive des Anheftens eines Kontrollabschnittes (10, 12) an dem Bauteil (20), unter Benutzung des Haftmittels und Beobachten des Bauteiles um zu bestimmen, ob der Kontrollabschnitt an dem Bauteil nach der Inbetriebnahme anhaftet.

14. Verfahren nach Anspruch 12, unter Einschluß des Auftragens mindestens zweier Haftmittel auf das Bauteil, welche verschiedene Schmelztemperaturen haben.

15. Verfahren nach Anspruch 13, unter Einschluß des Anheftens zumindest zweier Kontrollabschnitte (10, 12) an dem Bauteil (20) unter Benutzung zweier verschiedener Haftmittel, welche unterschiedliche Schmelzpunkte haben.

16. Verfahren nach Anspruch 12, wobei das Bauteil (20) ein äußeres rohrförmiges Teil eines isolierten Dampfeinspritzrohres (30) aufweist, welches aus dem äußeren rohrförmigen Teil (20) und einem inneren Rohrteil (22) besteht, welches im Abstand innerhalb des äußeren Rohrteiles angeordnet ist und mit diesem einen ringförmigen Raum (24) bildet, wobei das Haftmittel zumindest an einer der inneren und äußeren Oberflächen des äußeren Rohrteiles (20) aufgetragen ist.

17. Verfahren nach Anspruch 16 unter Einschluß des Anheftens eines Kontrollabschnittes (10, 12) an dem äußeren Rohrteil (20) unter Benutzung des Haftmittels.

18. Verfahren nach Anspruch 17, wobei der Kontrollabschnitt (10, 12) abgeschrägte Kanten hat.

19. Verfahren nach Anspruch 17 oder 18 unter Einschluß des Auftragens des Haftmittels und des Verbindens des Kontrollabschnittes (10) mit einer äußeren Oberfläche des äußeren Rohrteiles (20) und Anbringen eines Ringes (40) um den Kontrollabschnitt, zum Schutz des Kontrollabschnittes.

20. Verfahren nach Anspruch 12, wobei das Haftmittel auf einer Seite des Bauteiles (20) aufgetragen wird und der Schritt des Beobachtens des Bauteiles (20) das Erfassen von der anderen Seite des Bauteiles einschließt, ob das Haftmittel auf der einen Seite anhaftet.

**Revendications**

1. Procédé de détection de l'exposition d'un organe à une température choisie supérieure à l'ambiante, au cours d'une opération, le procédé étant caractérisé en ce que:

on colle une éprouvette (10, 12) à l'organe (20) en utilisant un agent de collage de nature à passer de l'état solide à l'état liquide à une température au moins égale à la température choisie, de sorte que l'agent de collage cesse de coller l'éprouvette (10, 12) à l'organe (20) quand celui-ci est exposé à la température choisie;

on amorce l'opération; et

on observe l'organe (20) pour déterminer si l'éprouvette (10, 12) est collée à celui-ci.

2. Procédé selon la revendication 1, dans lequel l'agent de collage fond à la température choisie.

3. Procédé selon la revendication 1, dans lequel l'agent de collage se dégrade à la température choisie.

4. Procédé selon la revendication 1, la revendication 2 ou la revendication 3, dans lequel l'organe (20) est isolé sur sa surface intérieure par un moyen isolant, le fait d'atteindre la température choisie étant indicateur d'une défaillance du moyen isolant.

5. Procédé selon la revendication 4, comportant le collage de l'éprouvette (12) à la surface intérieure de l'organe (20).

6. Procédé selon la revendication 5, dans lequel l'étape d'observation de l'organe (20) en vue de déterminer si l'éprouvette (12) est collée à l'organe comprend la mesure par voie sonore de l'épaisseur de l'organe et de l'eprouvette éventuellement collée à celui-ci opérée à l'emplacement où l'éprouvette a été collée à l'organe.

7. Procédé selon l'une quelconque des revendications 1 à 4, comportant le collage de l'éprouvette (10) à une surface extérieure de l'organe (20) et l'observation visuelle de l'organe en vue de déterminer si l'éprouvette est collée à l'organe.

8. Procédé selon l'une quelconque des revendications 1 à 4, dans lequel l'éprouvette (12) est collée à l'organe (20) sur un premier côté de celui-ci, et l'étape d'observation de l'organe (20) comporte une détection effectuée à partir de l'autre côté de l'organe (20) pour savoir si l'éprouvette est collée audit premier côté.

9. Procédé selon l'une quelconque des revendications précédentes, dans lequel l'agent de collage est de la soudure choisie dans un groupe composé d'un alliage d'étain, d'un alliage de plomb, d'un alliage d'argent et d'un alliage de cuivre.

10. Appareil pour déceler l'exposition d'un organe à une température choisie supérieure à l'ambiante au cours d'une opération, l'appareil étant caractérisé par une éprouvette (10, 12) collée à l'organe (20) avec un agent de collage de nature à passer de l'état solide à l'état liquide à une température au moins égale à la température choisie de sorte qu'il n'est pas capable de coller l'éprouvette (10, 12) à l'organe (20) quand celui-ci est exposé à la température choisie.

11. Tuyau d'injection de vapeur isolé (30) caractérisé par:

un tube extérieur (20);

un tube extérieur (22) monté à l'intérieur du tube extérieur (20) et délimitant une espace annulaire (24) situé entre les parois de tuyau intérieure et extérieure;

un moyen d'isolation prévu dans l'espace annulaire (24) pour isoler le tube extérieur (20) du tube intérieur (22); et

une pastille (10, 12) collée à l'une au moins des surfaces intérieure et extérieure du tube extérieur (20) par un agent de collage de nature à passer de l'état solide à l'état liquide à une température au moins étale à la température choisie de sorte qu'il cesse de coller l'éprouvette (10, 12) au tube extérieur (20) quand celui-ci est exposé à la température choisie pour indiquer par là une exposition du tube extérieur à la température choisie.

12. Procédé de détection de l'exposition d'un organe à une température choisie supérieure à l'ambiante, au cours d'une opération, le procédé étant caractérisé en ce que:

on applique sur l'organe (20) un agent de collage, lequel est de nature à passer de l'état solide à l'état liquid à une température au moins égale à la température choisie, de sorte que l'agent de collage cesse d'adhérer à l'organe (20) quand celui-ci est exposé à la température choisie;

on amorce l'opération; et

on observe l'agent de collage pour déterminer s'il est collé à l'organe (20).

13. Procédé selon la revendication 12, comportant le collage d'une éprouvette (10, 12) à l'organe (20) à l'aide de l'agent de collage et l'observation de l'organe en vue de déterminer si l'éprouvette est collée à l'organe après l'amorçage de l'opération.

14. Procédé selon la revendication 12, comportant l'application sur l'organe (20) d'au moins deux agents de collage ayant des températures de fusion différentes.

15. Procédé selon la revendication 1, comportant le collage à l'organe (20) d'au moins deux éprouvettes (10, 12) à l'aide de deux agents de collage différents ayant des points de fusion différents.

16. Procédé selon la revendication 12, dans lequel l'organe (20) comprend un organe tubulaire extérieur de tuyau d'injection de vapeur isolé (30) formé de l'organe tubulaire extérieur (20) et d'un organe tubulaire intérieur (22) espacé vers l'intérieur de l'élément tubulaire extérieur et formant avec lui un espace annulaire (24), l'agent de collage étant appliqué sur l'une au moins des surfaces intérieure et extérieure de l'organe tubulaire extérieur (20).

17. Procédé selon la revendication 16, comportant le collage d'une éprouvette (10, 12) à l'aide de l'agent de collage sur l'élément tubulaire extérieur (20).

18. Procédé selon la revendication 17, dans lequel l'éprouvette (10, 12) présente des bords biseautés.

19. Procédé selon la revendication 17 ou 18, comportant l'application de l'agent de collage et la liaison de l'éprouvette (10) à une surface extérieure de l'organe tubulaire extérieur (20) et l'apposition d'un anneau (40) autour de l'éprouvette par la protection de celle-ci.

20. Procédé selon la revendication 12, dans lequel on applique l'agent de collage à l'organe (20) sur un premier côté de celui-ci, et l'étape d'observation comporte une détection effectuée à partir de l'autre côté de l'organe pour savoir si l'agent de collage est collé audit premier côté.

FIG. 1

FIG. 2

FIG. 3

COUPON GONE

COUPON BONDED